# EUROPÄISCHE PATENTSCHRIFT

(11) **EP 0 975 515 B1**
(45) Veröffentlichungstag und Bekanntmachung des Hinweises auf die Patenterteilung: **13.10.2004**
(21) Anmeldenummer: 98922643.6
(22) Anmeldetag: 03.04.1998
(51) Int. Cl.: B63C 11/24

(54) **VERFAHREN UND VORRICHTUNG ZUR AUTONOMEN ATEMGASHERSTELLUNG, ATEMGASAUFBEREITUNG UND ATEMGASVERSORGUNG DES TAUCHERS IN EXTREMEN TIEFEN**
METHOD AND DEVICE FOR PRODUCING AUTONOMOUS BREATHING GAS AND PROCESSING AND PROVISION OF BREATHING GAS FOR A DIVER AT EXTREME DEPTHS
PROCEDE ET DISPOSITIF POUR PRODUIRE, TRAITER ET FOURNIR DE FACON AUTONOME DU GAZ RESPIRATOIRE DESTINE A UN PLONGEUR SE TROUVANT A DES PROFONDEURS EXTREMES

(30) Priorität: 11.04.1997 DE 19716749; 03.04.1998 DE 19816373
(43) Veröffentlichungstag der Anmeldung: 02.02.2000
(73) Patentinhaber: Todorov, Gueorgui, 22159 Hamburg (DE)
(72) Erfinder: Todorov, Gueorgui, 22159 Hamburg (DE)
(74) Vertreter: Richter, Werdermann, Gerbaulet & Hofmann
(86) Internationale Anmeldenummer: PCT/EP1998/001976
(87) Internationale Veröffentlichungsnummer: WO 1998/049054

(56) Entgegenhaltungen:
- DE-C- 834 201
- GB-A- 2 208 203

## Beschreibung

Die Erfindung betrifft ein Verfahren und ein zu dessen Ausführung dienendes völlig autonomen rückentragbaren Schwimmtieftauchgerät zur Atemgasherstellung, Atemgasaufbereitung und Atemgasversorgung des Tauchers in Tauchtiefen von 0 bis 1000 m.

Bei bekannten Tauchgeräten mit offenem oder halbgeschlossenem System steigert sich der Gasverbrauch in Tiefen ab 50 - 100 m enorm. Völlige Ausschaltung eines Atemgasverlustes wird nur durch das geschlossene System erreicht.

So schildert die DE - C-834 201 (Drägerwerk, Lübeck) ein selbstmischendes Tauchgerät mit geschlossenem Kreislauf. In diesem Verfahren wird die Menge der Einatemluft, bzw. die Menge der Ausatemluft gemessen und in Abhängigkeit von der Differenz dieser Mengen wird Sauerstoff zugeführt.

Die GB A-2 208 203 (Carmellan research Ltd.) schildert ein selbstmischendes Tauchgerät vom Typ Rexnord CCR 155. Diese Tauchgeräte sind enstanden nachdem auf dem Markt als Abfallprodukt der amerikanischen Raumfahrt Sauerstoffsensoren erschienen sind, die mit hinreichender Genauigkeit und Zuverlässigkeit die Messung des entscheidenden Sauerstoffpartialdruckes zulassen. In einem völlig geschlossenen Kreislauf wird das Gerät mit Hilfe von Inertgas auf den in der Tauchtiefe herschenden Umgebungsdruck gebracht und dann entsprechend der Messung des Sauerstoffsensors nur noch der gewünschte O₂ - Partialdruck eingeregelt - das heißt im Verlauf des weiteren Tauchganges ist nur noch der vom Taucher tatsächlich verbrauchte Sauerstoff zu ersetzen.

In diesem Verfahren die Daten von Sauerstoff-Partialdruck und CO₂-Anteil in dem Atemgas werden mit Hilfe von einem an der Oberfläche gebrachten Personel Computer bearbeitet, mit dem entsprechenden Software-Programm.

In Tiefen über 50 - 100 m ist der Einsatz von diesen selbstmischenden Tauchgeräten mit geschlossenem System CCR (Closed-circuit-rebreather) aus sicherheitstechnischen Gründen fast nicht möglich. Die wichtigsten Nachteile sind drei: Es keinen absoluten Verlaß auf die Sicherheit der Atemgas mischenden Elektronik, die den genauen Sauerstoff Partialdruck in den verwendeten Helium-Sauerstoff-Gemischen regelt; der Taucher pumpt das Atemgas mit seiner eigenen Lunge durch das Gerät, um das ausgeatmete CO₂ aus dem Gerätekreislauf zu beseitigen (in 300 m Tiefe ist die Gasdichte 31 bar); im Gegensatz zum offenen Kreislauf entfällt in geschlossenem System der ständige Gasstrom, der die vielen dringenden Verunreinigungen fortwäscht. Der zulässige Spielraum für den Sauerstoff- und Kohlendioxidgehalt wird in größeren Tiefen immer kleiner, es wächst die Gefahr von CO₂ und O₂ Vergiftung.

Weiterer Nachteil - in Tiefen von 200 - 500 m - ist die Einsatzdauer wegen Gasmangel auf 15 - 20 min eingeschränkt.

Der Erfindung liegt daher die Aufgabe zugrunde, ein Verfahren zur Gasaufbereitung, Gasreinigung und Atemgasgemisch-Herstellung gemäß der entsprechenden Tauchtiefe zu finden, zugleich eine entsprechende Gaszufuhr und Gasspeicherung zu gewährleisten, um einen Taucher mit der notwendigen Atemgasmischung in kleinen und größeren Tiefen zu versorgen und auf dem Grundprinzip von diesem Verfahren ein völlig autonomes rückentragbares Schwimmtieftauchgerät zu schaffen.

Die Aufgabe wird durch ein in Anspruch 1 angegebenes Verfahren und durch ein in Anspruch 8 angegebenes Schwimmtieftauchgerät gelöst.

Hierbei ist vorgesehen, daß in einem völlig geschlossenem Kreislauf - Pendel - Speicher System eine bestimmte Menge fertiges Gasgemisch aus Inertgas (Helium) und Sauerstoff ständig zwischen zwei Hochdruckgasbehälter (15, 29) befördert wird, wobei am Anfang das notwendige Atemgasgemisch auf dem Prinzip der Überdosierung und auf Konstantdosierungsbasis in einem Kreislauf gelangt, bestehend von Einatembeutel (37), Taucher-Helm (6), Ausatembeutel(11), Doppelpack CO₂-Absorptionsfilter (16,17); das Atemgas-Bewegung in diesem Kreislauf wird von einer Nieder-Druck Membran-Pumpe (13) beschleunigt; das Atemgas von CO₂und anderen Verunreinigungen bereinigt, getrocknet und erwärmt wird, zusätzlich mit reinem Sauerstoff gemäss den zulässigen Sauerstoff-Partialdruck für die entsprechende Tiefe auf Konstantdosierungsbasis und mit Inertgas bei eventuellem Verlust angereicht wird und anschließend die überschüssige Menge Atemgasgemisch von einem Hoch-Druck Verdichter (23) (Kolben oder Membrane Ausführung), angesaugt und unter Hoch-Druck 220 - 450 bar jeweils in einem der beiden Druckgasbehälter (15,29) gespeichert wird; nachdem die ganze Menge Atemgasgemisch in dem einen Druckgasbehälter gespeichert wird, schaltet sich ein Magnet-Ventil(31) um und derselbe Prozess beginnt von neuem an in die entgegengestzte Richtung.

In dieser Art und Weise entsteht wirklich ein völlig geschlossener Kreislauf, wo die Ausnutzung des teueren Inertgas-(Helium)-Sauerstoff-Gasgemisches 100%-ig und somit verlustlos ist. Die Gasversorgung bei diesem System kann grundsätzlich durch fertiges Gasgemisch erfolgen auf Konstantdosierungsbasis, also mechanisch und nicht elektronisch; die eventuell benutzte Elektronik wird aureeine untergeordnete Rolle haben, was die Sicherheit des Tauchens enorm steigert. Die Anreicherung des Atemgasgemisches mit Sauerstoff gemäß den zulässigen O₂- Partialdruck kann auch auf Kontstantdosierungsbasis erfolgen, eine selbstmischende Automatik wird nur eine untergeordnete Rolle spielen.

Da der Verdichter (23) von ein oder zwei Gleichstrom-Elektromotoren mit einer Gesamtleistung von zwei bis 3 Kw, 12V/24V betrieben wird, die von einer oder mehreren Batterien mit Strom-Kapazität zwischen 100 - 600 oder mehr Amper-Stunden versorgt werden, wird die Tauchzeit des Tauchers nicht mehr von der mitgeführten Menge Atemgas abhängig sein, sondern von der vorhandenen Strom-Kapazität. In dieser Weise ergeben sich Tauchzeiten von einigen Stunden in Tiefen bis 700 - 800 m, bis 24 oder mehr Stunden in kleineren Tiefen, vorausgesetzt, die CO₂ - Filter werden regelmäßig ersetzt; der Taucher kann immer zusätzlich durch Kabel mit Strom von der Oberfläche, Unterwasserfahrzeug oder Unterwasserstation versorgt werden, was viel günstiger ist, als eine Schlauchversorgung. Der Unterschied - der Taucher kann zu jeder Zeit diese Verbindung abschalten und später anschalten, die Kabelversorgung ist viel leichter und kompakter, zugleich auch sicherer als eine Schlauchversorgung.

Bei diesem Verfahren entstehen viele andere Vorteile: der Verdichter und die Elektromotoren werden ölgekühlt. die dabei entstehende Wärme wird mittels eines Wärmetauschers für Heiss-Wasser-Herstellung benutzt; damit werden der Taucher, das Atemgas und das Gerät warm gehalten, was bei Tieftauchen enorm wichtig ist; mittels einer zusätzlichen Ausrüstung von ein oder zwei Antriebselektromotoren mit einer Gesamtleistung 0.3 - 0.5 Kw, 12V/24V besteht die Möglichkeit einer schnellen Fortbewegung des Tauchers mit 4 - 6 Knoten Geschwindigkeit und einer Reichweite von 30 bis 200 Kilometer, je nach der mitgeführte Batterie-Strom-Kapazität. Es besteht weiter die Möglichkeit von ständiger Benutzung von Licht-, Foto-, TV-,Video-, Navigations-, Sprech-, Tauch-Computer-, Deko-Stops-Computer- und anderen Ausrüstungs-Anlagen, allen bis jetzt bekannten Typen von Elektro- und Hydraulisch-mechanischen Instrumenten und Werkzeugen; nicht zuletzt besteht die Möglichkeit, zu jeder Zeit das Gerät auf das Prinzip allen bis jetzt bekannten Typen Tauchgeräte umzuschalten: als offenes System, halbgeschlossenes System, geschlossenes System mit Mischgas-Kreislauf, sogar als geschlossenes System mit reinem Sauerstoff-Kreislauf, wobei bei letzterem alle Sicherheitsmaßnahmen zu treffen sind, betreff Tauchen mit Sauerstoff-Tauchgeräten. Diese Systeme sind nach Belieben zu benutzen, abhängig von der gestellten Einsatz-Augabe, nach Abschalten und Abschliessen der Hochdruck-Verbindung mit dem Verdichter, oder bei Notwendigkeit - nach Verbrauch der Strom-Kapazität, Beschädigung oder Ausbleiben der Elektromotoren oder des Verdichters (als Notfall-System).

Dieses Verfahren - Druck-Pendel-Speicher System macht es möglich, einen Taucher mit verschiedenen Atemgasmischungen in Tiefen von 0 bis 700 - 800 m frei zu versorgen für eine relativ lange Zeit, das Verfahren hat sogar Reserven für Tiefen von 1000 und mehr Meter und kann benutzt werden, sobald die existierenden jetzt Atemphysiologischen Grenzen von 700 m Tauchtiefe von der Wissenschaft beseitigt werden.

Die große Einsatzdauer ermöglicht Schnelltauchen ohne Tauch-Kammer (Bounce-Diving) in Tauchtiefen bis 300 - 350 m und freien Aufstieg an die Oberfläche mit einzuhaltenden Austauchzeiten (Deko-Stops) oder Ausstieg aus dem Tauchfahrzeug in einer bestimmten Tiefe, z.B. 300 m, Arbeitsvorgang in 600 - 700 m Tiefe, dann selbstständige Rückkehr. Ausgerüstet mit einem tragbaren Kabeltrommel mit Winsch hat der Taucher die Möglichkeit auf Wunsch oder Notwendigkeit zu jeder Zeit Sprech- und Strom-Verbindung mit der Oberfläche herzustellen.

Die kompakte Bauweise von Tauchgeräten, hergestellt auf dem Prinzip von diesem Verfahrens ermöglicht Tieftaucheinsätze direkt vom Strand, Boot, Schiff, U-Boot, Unterwasserstation, Hubschrauber oder Flugzeug, sogar durch Fallschirmsprung. Das Gerät kann für gewerbliche, sportliche, militärische, Wissenschaft liehe, archeologische etc. Zwecke benutzt werden. Für militärische und anderen Aufgaben zeichnen sich total neue Perspektiven und Anwendungs Felder ab - z.B. zum ersten Mal wird es möglich sein, nicht nur kleinen Kundschafter-Gruppen für Sabotageeinsätze, sondern ganze Divisionen von mehreren Tausend Marine-Diver-Infanteristen zu bilden, die Tiefenbereiche von 0 - 1000 m beherrschen, mit Einsatzradius 100 - 200 km operieren, alle möglichen Waffensysteme mit sich tragen und anwenden, sich mit großer Geschwindigkeit zwischen 6 und 10 Knoten bewegen.

Zugleich die Erfindung macht es möglich, daß sich jede private Person das Gerät beschafft und große Tiefen selbst ohne großen Aufwand erreicht, um nach Schätzen zu suchen, für sportliche, archäologische und wissenschaftliche Zwecke benutzt.

Die Erfindung ermöglicht die weitere Entwicklung von manchen Zweigen der Meeresforschung und Industrie - z.B. direkte Manganknollengewinnung aus Wassertiefen 700 m (in der Zukunft eventuell bis 1000 und mehr Meter), weitere Gewinnung von Erdöl und Erdgas aus diesen Tiefen.

Das neue Druck-Pendel-Speicher Verfahren zur autonome Atemgasherstellung, Atemgasaufbereitung und Atemgasversorgung des Tauchers in kleineren bis extremen Tiefen erlaubt die Benutzung von einzelnen Inertgasen oder unterschiedliche Mischungen von Inertgasen mit Sauerstoff, inklusive mit Wasserstoff.

Bei dem Gebrauch von Wasserstoff sind bestimmte Sicherheitsmaßnahmen zu treten. Es ist bekannt, das ohne einen ausreichenden Sauerstoffgehalt von 4 Vol.% kann sich der Wasserstoff nicht entzünden. Deshalb sollte ein Sauerstoffgehalt von maximal 3 Vol.% nie überschritten werden, d.h. eine Atemgasmischung aus Sauerstoff, Helium und Wasserstoff kann man nur in Tiefenbereich von 50 bis 700 m (in der Zukunft eventuell bis 1,000 m Tiefe) einsetzen. Um dieselbe Atemgasmischung ohne den Wasserstoff in Tiefenbereich 0-50 m zu benutzen mit erhöht Sauerstoffgehalt, sollte man den Wasserstoff von der Atemgasmischung entfernen durch Separierung oder Katalytische Verbrenung. Die Separierung von Wasserstoff und Helium ist möglich mit einer Palladiummembran - Diffusionszelle. Erst nachdem der Wasserstoff von dem Atemgasgemisch vollständig entfernt ist, kann der Sauerstoffgehalt über 4 Vol.% erhöht werden.

Das wichtigste Merkmal des neuen Verfahrens besteht darin, das der Prozes der Benutzung des fertigen Gases, die Aufbereitung des verbrauchten Gases und die Herstellung des neuen Gases und dessen Speicherung unter Hochdruck in einer der beiden Druckgasbehälter in einer Zeitspanne von 20 - 30 min. erfolgt. In dieser Zeit der Taucher kann automatisch oder manuell einzelne Inertgasen einsetzen, unterschiedliche Mischungen von Inertgasen kombinieren, den gesamten Prozes der Herstellung und Aufbereitung des Atemgases beobachten, kontrolieren und wenn notwendig, korigieren.

In Zusammenhang mit der Nutzung des Wasserstoffs als möglichen Atemgas in dem neuen Druck-Pendel-Speicher Verfahren ist auch eine andere Anwendung denkbar, was die Energie-Stromversorgung des autonomen rückentragbaren Schwimmtauchgerätes betrifft, nämlich die Stromversorgung mittels einer Brennstoffzelle. Besonders geignet zu diesem Zweck sind die Alkalischen Brennstoffzellen AFC (Alkaline Fuell Cell), die als hochefficiente elektrochemischen Stromerzeuger ausschließ lich mit reinst- Sauerstoff und reinst- Wasserstoff gespeist sind. Untergebracht in einem Druck-kompensiertem Behälter, die Brenstoffzelle kann mit dem vorhandenen Wasserstoff und Sauerstoff gespeist werden und in dieser Weise für eine mehrstündige Stromversorgung des neuen Tauchgerätes dienen.

Denkbar sind auch anderen Typen von Brennstoffzellen (Wasserstoff - Luft), in Kombination mit den neuen Typen Li-Ionen Elektrobatterien, die wesentlich die Stromversorgung verbessern können.

Die Erfindung wird an Hand der Figuren erläutert, es zeigt
Fig. 1 und Fig. 1a - Funktionsschema

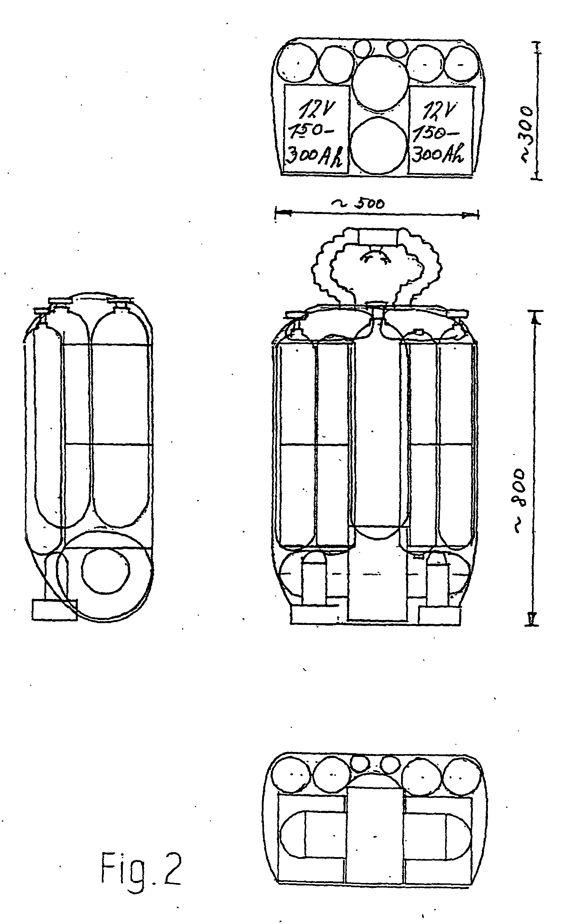

Fig. 2 und 2a - einen Längs- und einen Querschnitt

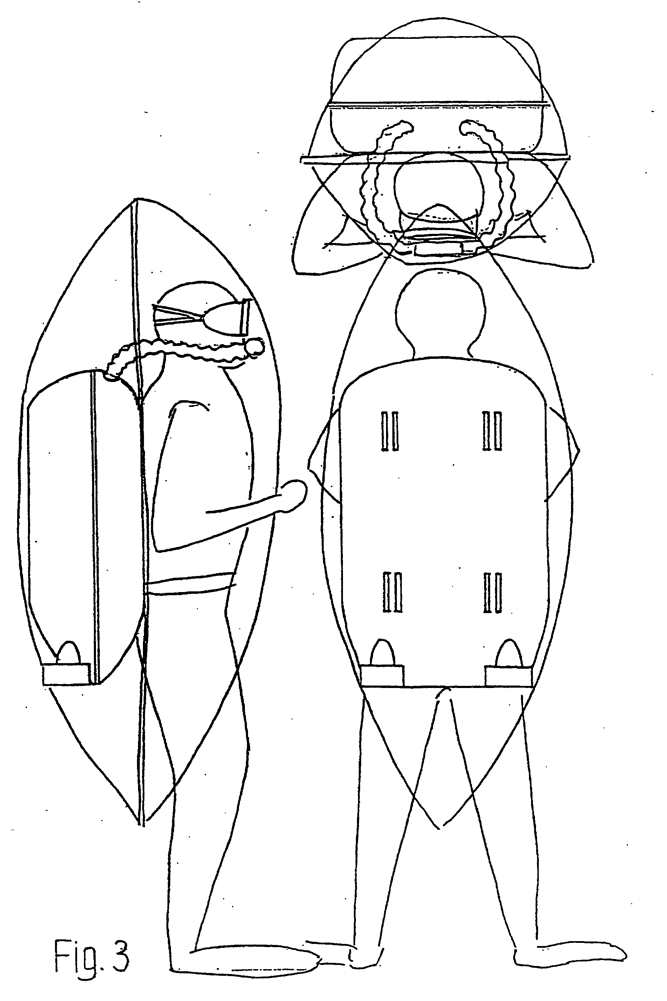

Fig. 3 und 3a -eine Seiten- und eine Draufsicht

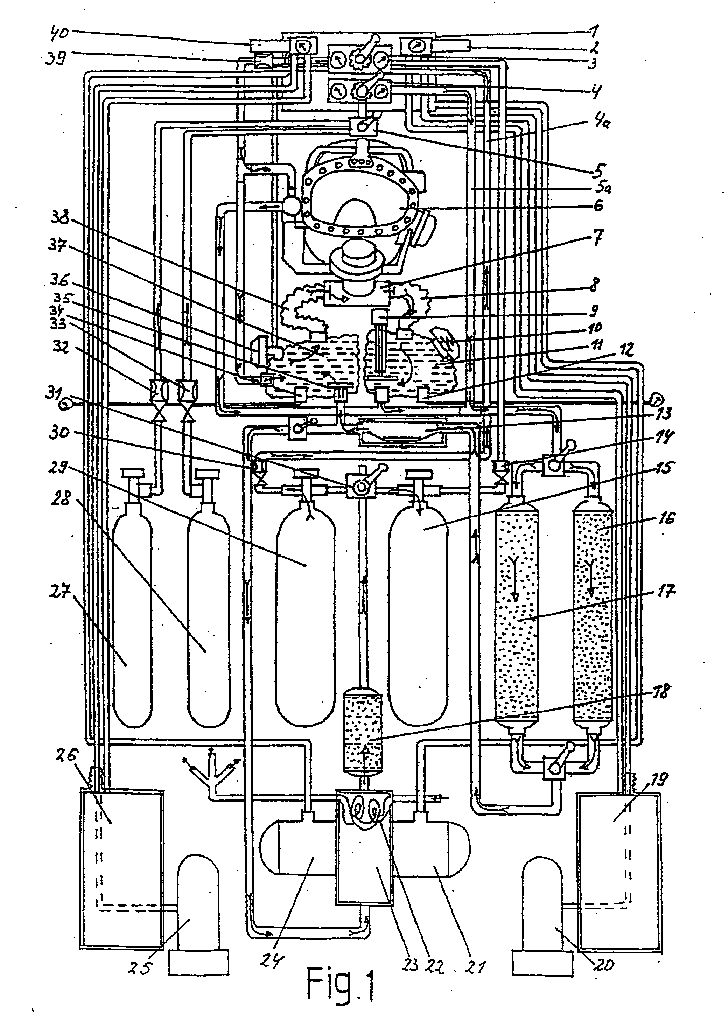

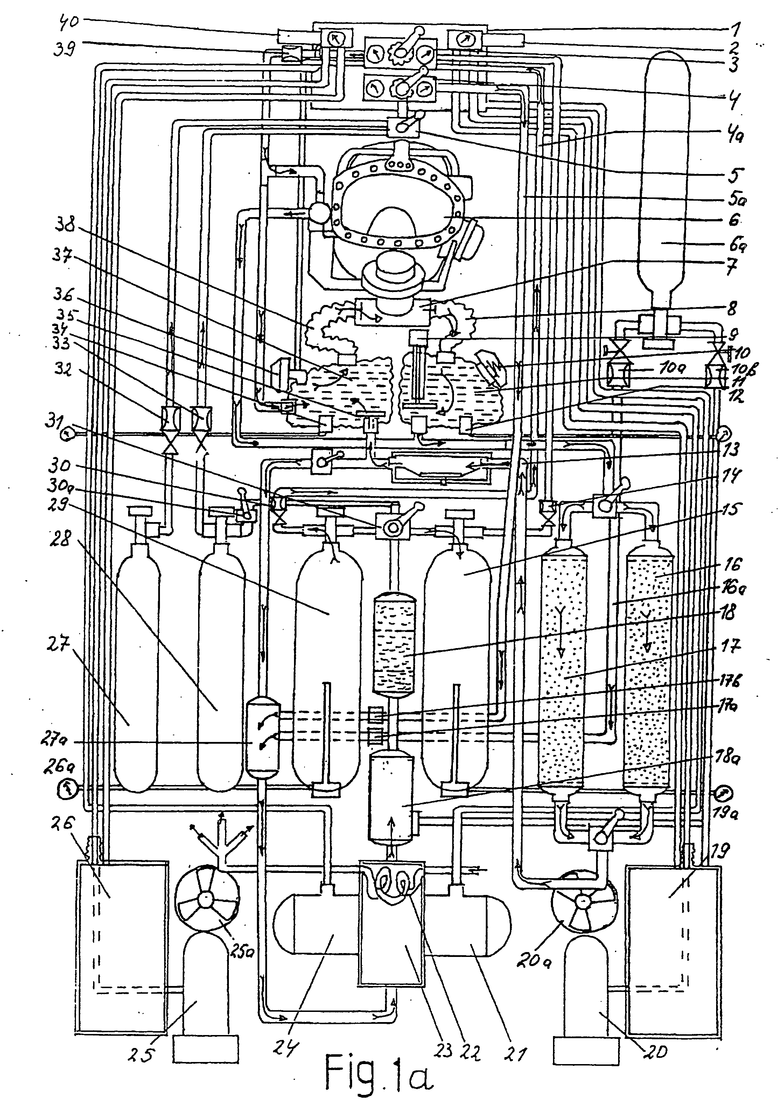

Das Funktionsprinzip des Verfahrens und zu dessen Ausführung dienenden völlig autonomen rückentragbaren Schwimmtieftauchgerät wird an Hand Fig. 1 näher erläutert:

Aus dem Druckgasbehälter (Mischgasstahlflasche) (29) strömt bei geöffneten Ventil das Gas durch den Hochdruckanschluss zum einstufigen Druckminderer (30), wird dort auf überkritischen Druck gemäß der Tauchtiefe bis 110 bar entspannt und durch die Dosierungsdüse (39) direkt in den Einatembeutel (37) oder direkt in Taucher-Helm (6) eingespeist. Von dort gelangt das Atemgas in die Atemorgane des Tauchers.

In der Ausatemphase strömt das Gas zurück durch den Ausatembeutel (11) oder direkt aus dem Taucher Helm (6) in die beiden CO₂ - Absorptionsfilter (16, 17), wird von dort von der Niederdruck-Membranpumpe (13) angesaugt und durch Rückschlag-Ventil (35) wieder in dem Einatembeutel (37) eingespeist. So wird der Kreislauf geschlossen. Die Niederdruck-Membranpumpe (13) wird durch elektrische Impulse betätigt und hat die Aufgabe, das Atemgas ständig in diesen Kreislauf umzuwälzen, damit der Taucher selbst weniger Atemwiderstand und keine Behinderung der Atmung mit komprimiertem Gase verspürt.

Überschüssiges Gas in der Größenordnung von 10 bis 100 Normal Liter/minute je nach der Tauchtiefe wird aber nicht aus dem Gerätekreislauf durch das Überdruckventil (10) in das umgebende Wasser entweichen (wie das bei halbgeschlossenem System die Regel ist), sondern von dem Verdichter (23) angesaugt und unter Hochdruck 220 - 450 bar durch Drei-Wege-Ventil (31) in die zweite Mischgasflasche (15) komprimiert und gespeichert, wobei die Flasche (15) am Anfang leer ist.

Der Verdichter (23) ist ein Kolben-, vorzugsweise Membrane-Mini-Hochdruck Kompressor mit einer Leistung 220 - 450 bar, Ansaug- und Liefer-Leistung zwischen 10 - 100 Liter/minute, betrieben von zwei Gleichstrommotoren (21,24) mit einer Gesamtleistung von 2 bis 3 Kw, 12V/24V. Die Elektromotoren werden gespeist von einer oder mehreren Batterien (19,26) mit 12V/24V mit Strom-Kapazität von 100 bis 600 Ah oder mehr, je nach der Ausführung. Die Batterien können Blei/Säure, Nickel/Kadmium oder Silber/Zink-Typ sein und sind in Ölboxen für druckausgleich untergebracht.

Der Verdichter (23) komprimiert das überschüssige Atemgas durch Filtereinheit (18), bestehend von Kondensatabscheider, Ölfilter (bei Kolben-Kompressor), Geruchsfilter und Nachtrocknenfilter, wobei das überschüssige Atemgas gereinigt und in der zweite Mischgasflasche (15) unter Hochdruck 220 - 450 bar gespeichert wird.

Das Gerät ist für 16 oder 18 Haupt-Tauchtiefenbereche konstruiert und ausgelegt. Jedem Tauchtiefenbereich ist eine bestimmte Dosierung und ein bestimmtes Mischgas zugeordnet. Die dosierte Mischgasmenge bleibt - unabhängig von der Tauchtiefe - konstant.

Die Gaszufuhr in Einatembeutel (37) erfolgt automatisch oder ist wahlweise manuell regulierbar durch Dosierventil (39) am Kontroll Panel (1). getragen auf der Brust des Tauchers und kann je nach der Tauchtiefe von 10 Liter/minute (Bereich 0-50 m) bis 95 - 100 Liter/minute (Bereich 600 - 700 m) erfolgen.

Die Gasgemisch-Ansaug- und Lieferleistung des Verdichters (23) ist auch automatisch oder manuell regulierbar durch die stufenweise Stromaufnahme-Regulierung der beiden Elektromotoren (21,24) durch Drehschalter (2,40) am Kontroll Panel (1), wobei stufenweiser Amper-Aufnahme zwischen 24 bis 200 Amper/Stunde erfolgen. Je nach dieser Amper-Aufnahme-der Elektromotoren kann dadurch auch der Verdichter Ansaug- und Lieferleistungen von 10 bis 100 Liter/minute produzieren. Diese Menge Atemgas, die von dem Verdichter unter Hochdruck in der zweiten Mischgasflasche gespeichert wird, ist ungefähr 10% - 15% von der gesamten Menge Atemgas, die ein Taucher in der entsprechende Tiefe pro Minute braucht, das übrige Gas bleibt in dem geschlossenen Kreislauf sich zu drehen. In dieser Art und Weise wird der Strom gespart, der benötigt wird, um das Gas wieder zu komprimieren und zu speichern für Wiederverwendung.

Um Notfall-Situationen zu vermeiden und damit keine Differenzen entstehen zwischen Gaszufuhr- und Ansaugleistung des Verdichters, sind Dosierventil (39) und Drehschalter (2,40) synchronisiert. Zusätzlich ist am Ausatembeutel (11) das Sicherheits-Ventil (9) angebracht, das bei weniger Menge Ausatemgas verhindert, daß der Verdichter (23) Gas aus der Lunge des Tauchers ansaugt, wobei er sich schliesst. Zugleich besitzt das Sicherheitsventil (9) Abschalt-Automatik, die die Elektromotoren (21,21) im Notfall ausschaltet. An dem Einatembeutel (37) ist auch ein Lungenautomat (36) instaliert, der bei Notfall Atemgas zusätzlich liefert, oder erlaubt, im Ausnahmefall das ganze System in ein offenes Kreislaufgerät umzuwandeln.

In der Abhängigkeit von der Tauchtiefe und der benötigten Gasgemisch-Lieferleistung des Verdichters, respektiv Motor-Stromverbrauchs, ergeben sich Betriebs- oder Tauchzeiten zwischen 3 Stunden in Tauchtiefe 600 - 700 m bis 24 Stunden oder mehr in Tiefenbereich 0 - 100 m, je nach der Stromkapazität der mitgeführten Elektrobatterien.

Der Verdichter (23) und die Elektromotoren (21, 24) sind in ein Stahlgehäuse untergebracht und Ölgekühlt. Die entstehende Wärme wird mittels der Wärmetauscher (22) als Warmwasser mit Temperatur 43 - 45° C dem Taucher zugeführt, um ihn, das Atemgas und das Gerät von der Kälte der Tiefe zu schützen.

Das Überdruckventil (10) schaltet sich ein bei schnellem Auftauchen oder bei eventuellen Differenzen zwischen Gaszufuhr- und Ansaugleistung des Verdichters.

Sobald die Mischgasflasche (15) mit gereinigtem Atemgas von dem Verdichter (23) unter Hochdruck 220 - 450 bar gefüllt wird, schaltet sich das Drei-Wege-Ventil (31) um (automatisch oder manuell) und es beginnt von vornherein derselbe Prozeß wieder - diesmal wird aus Mischgasflasche (15) das komprimierte Atemgas auf überkritischen Druck entspannt und durch Dosierdüse (39) am Kontroll Panel (1) in Einatembeutel oder direkt in den Taucher-Helm eingespeist. Das ausgeatmete Gas gelangt wiederum in Ausatembeutel (11), dann in CO₂-Absorptionsfilter (16,17), wird von der Niederdruck Membranpumpe (13) angesaugt und in Einatembeutel durch Rückschlagventil (35) eingespeist. Das überschüssige Atemgas wird von dem Hochdruck-Verdichter (23) angesaugt, durch Filtereinheit (18) gereinigt und indie diesmal leere Mischgasflasche (29) unter Hochdruck 220 - 450 bar gespeichert. Dieser Prozeß wird sich solange wiederholen, bis eine gewisse Batterie-Stromkapazität vorhanden ist.

Zusätzlich wird in diesem Vorgang durch Druckminderer und Dosierungsdüse (33) reiner Sauerstoff in Ausatembeutel (11) zugeführt aus Stahlflasche (28) auf Konstantdosierungsbasis, so daß der Sauerstoff-Anteil in dem Gasgemisch konstant in der gewünschten zulässigen Grenzen bleibt. Ähnlich wie bei der Dosierung von Mischgas, ist die zusätzliche Sauerstoff-Dosierung und Zufuhr für 16 Haupttiefenbereiche ausgelegt und konstruiert, damit ein voller Synchron zwischen Mischgasdosierung und Sauerstoff-Dosierung entsteht und der Sauerstoff-Partial-Druck in jeder Tiefe konstant in den gewünschten Grenzen bleibt.

In einer Notfallsituation, wenn der Verdichter oder die Elektromotoren aus verschiedenen Gründen nicht mehr funktionieren, kann der Kreislauf weiter betrieben werden nur von der Niederdruck-Membranpumpe , die auf dem Prinzip der Elektromagneten funktioniert, oder kann auch von einem kleinen Elektromotor betrieben werden, vorausgesetzt, es ist noch Strom-Kapazität in der Batterien vorhanden und die Sauerstoff-Zufuhr aus Stahl flasche (28) auf Konstantdosierungsbasis weiter erfolgt. Das ist möglich, weil in dem gesamten Kreislauf-Volumen: Ein- und Ausatembeutel, Taucher-Helm, oder Mundstück, Ein- und Ausatemschläuche, CO₂- Absorptionfilter etc.(insgesamt ungefähr 25 - 30 Liter Volumen plus der entsprechende Druck der Tiefe - z.B. in 300 m = 31 bar, das macht zusammen 900 Normal Liter Volumen) genügend Inertgas- Sauerstoff-Gemisch vorhanden ist, natürlich für eine bestimmte kurze Zeit. Danach kann das Gerät von dem Taucher in einem halbgeschlossenem Kreislaufgerät umgewandelt werden und in dieser Weise der vorhandene Mischgasvorrat benutzt werden.

Um den Sauerstoff-Anteil in dem Atemgasgemisch zu kontrolieren, ist das Gerät mit Sauerstoff-Anteil-Anzeige und CO₂ - Anteil-Anzeige (12) und (34) ausgerüstet.

Von Stahlflasche (27) wird nach Bedarf zusätzlich Inertgas (Helium) in den Ausatembeutel (11) zugeführt durch Druckminderer und Dosierungsdüse (32) in Abhängigkeit von eventuellem Verlust.

Um starke Strömungen zu überwinden oder sich horizontal oder vertikal zu bewegen, sind als Zusatz-Ausrüstung die Elektroantriebsmotoren (20,25) vorgesehen, die mit einer Gesamt-Lestung 0.3 - 0.5 Kw, 12V/24V dem Taucher einer Geschwindigkeit von 4 - 6 Knoten oder mehr geben können. Je nach der mitgeführten Batterie-Kapazität und notwendigen Wassertiefe kann die Reichweite 30 - 200 km betragen, was zu einer total neuen Qualität des Tauchens beiträgt.

Um weniger Strömungswiderstand und höhere Geschwindigkeit zu erzielen, sind als Zusatz-Ausrüstung spezielle Strömungslinien -Schalen in verschiedenen Varianten vorgesehen, die auf dem Basis-Gerät zusätzlich montiert werden können.

Ein speziel entwickelter Tauch-Computer kann den Taucher unterstützen und behilflich sein, ihm ständig ein Bild von allen notwendigen Parametern zu geben - z.B. Gaszufuhr, Gas-Dosierung, Gas-Vorrat, Gas- und Umgebungs Druck, Gas- und Wasser Temperatur, Tauchzeit, Dekostops, Ansaug- und Liefer-Leistung des Verdichters, Strom-Kapazität, O₂- und CO₂- Anteil, Elektromotoren Drehzahl, Wasser-Heizung Temperatur, Entfehrnung, Strömungs-Geschwindigkeit, Bewegungs-Geschwindigkeit, Navigation-Parametern etc.

Das Gehäuse des Geräts verbirgt noch zwei oder mehrere Fernlichter, Video-, TV-, und Fotokamera, Ampermeter- und Voltmeter-Anzeige, O₂- und CO₂- Anzeige, Unterwassersprechanlage, Navigations- und Ortungsgeräte. Das Gerät kann zusätzlich mit Kabel-Strom und Glasfaser-Kabel verbunden sein, wobei der Vorteil besteht, das der Taucher zu jeder Zeit diese Verbindung abschalten und etwas später nach Belieben wieder anschalten kann. Es besteht die Möglichkeit unter Wasser die CO₂- Filter auszuwechseln, wobei nur der eine CO₂-Filter jeweils weiter funktioniert. Nicht zuletzt bei Kabel- und Video-Verbindung mit der Oberfläche besteht die einzigartige Möglichkeit, den Taucher direkt bei seiner Arbeit zu kontrollieren und zu beraten; bei eventuellem Notfall kann das Gerät von der Komando-Zentrale in ein ROV (Remote Operation Vehicle) direkt umfunktioniert werden und bei Ohnmacht des Tauchers ihn in ein Unterwasserfahrzeug oder Station zu beförden, mittels den Antriebsmotoren.

Das Gerät kann in mehr als 10 unterschiedlichen Varianten und Modellen produziert werden, mit unterschiedlichen Batterie- und Stahlflaschen-Kapazitäten, Motor- und Verdichter-Leistungen, Ausmassen, Formen und Größen, je nach dem Verwendungs-Zweck.

Unterwasser hat das Gerät Neutralgewicht, Überwasser zwischen 50 bis 150 kg; das Gerät kann Überwasser nur mit einem kleinen Kran gehoben werden, oder auf kleinen Rollen zum Wasser gebracht werden. Die Ausmassen variieren zwischen: Länge 450 - 800 mm, Breite 450 - 500 mm, Höhe 250 - 300 mm und ermöglichen ein Ausstieg des Tauchers durch eine Luke mit 700 - 900 mm lichter Weite. Alle Geräteteile werden in einem Stromlinienförmigen Gehäuse aus glasfaserverstäktem Polyesterharz oder Nirostahlblech untergebracht und gegen mechanische Beschädigung geschützt.

Das Funktionsprinzip des neuen Druck-Pendel-Speicher Verfahrens in Zusammenhang mit der Benuzung von unterschiedlichen Inertgasmischungen mit Sauerstoff, inklusive mit Wasserstoff, wird an Hand der Figur 1 a näher erläutert:

Das Tauchgerät funktioniert bis einer Tiefe von 200 m nach dem beschriebenen in dem Haupt-Patent Verfahren. Ab dieser Tiefe auf Wunsch des Tauchers ist möglich zusätzlich zu dem Atemgasgemisch, bestehend aus Helium und Sauerstoff, eine bestimmte kontrolierte Menge Wasserstoff zuzufügen, auf Konstantdosierungsbasis, von Druckgasbehälter 6 a. Diese Menge Wasserstoff soll nicht 30 -50 vol% von dem gesamten Atemgasgemisch überschreiten, da der Wasserstoff ab einem Partialdruck von 18 bar narkotische Potenz besitzt.

Bei dem geöffneten Ventil strömt der Wasserstoff von Druckgasbehälter 6 a durch die Hochdruckanschluss zum einstufigen Druckminderer und Dosierungsdüse 10 a direkt in der Mischkammer 27 a, wird dort mit dem einströmenden Inertgas Helium und ensprechenden Anteil Sauerstoff (weniger als 3 Vol.% auf Konstantdosierungsbasis vermischt, von dem Explosiongeschützte Hochdruck verdichter 23 angesaugt und in dem leeren Druckgasbehälter 15 gespeichert. Dieser Vorgang dauert ungefähr 20 - 30 min., bis die gesamte Menge Helium, Sauerstoff und die dosierte Menge Wasserstoff in Druckgasbehälter 15 gespeichert wird. Die genaue Dosierung des Wasserstofs erfolgt mittels Flow-Kontroller 17 a.

Unmittelbar danach wird der Ventil von Druckgasbehälter 6 a zugemacht, der Vier-wege ventil 31 schaltet sich automatisch oder manuel um und von Druckgasbehälter 15 wird das vorgefertigte Atemgas auf überkritischen Druck entspant und durch Dosierdüse 39 an Kontrol Panel 1 in Einatembeutel 37 oder direkt in dem Taucher-Helm 6 eingespeist. Das ausgeatmete Atemgas wird in dem Kreislauf - Ausatembeutel 11, CO₂- Absorptionsfilter 16 und 17, Niederdruck-Membranpumpe 13 - Einatembeutel 37 oder Taucher-Helm 6 eingeführt. Das überschüssige Atemgas wird von dem Verdichter 23 angesaugt. Der Sauerstoffgehalt wird angereicht mit einer dosierten Menge Sauerstoff auf Konstantdosierungsbasis in der Mischkammer 27 a, dann wird das Atemgas unter Hochdruck in Filtereinheit 18 befördert, dort gereinigt und getrocknet, anschließend in die leere diesmal Druckgasflasche 29 unter Hochdruck gespeichert. Die Dosierung und die Kontrole des Sauerstoffs erfolgt erfolgt zusätzlich durch Flow-Kontroller 17 b.

Sollte der Taucher über der Grenze von 100 m Tiefe Auftauchen Richtung Oberfläche (mit dem minimalen Sauerstoffgehalt von 3 Vol.% in dem Atemgas ist möglich bis einer Tiefe von 50 m aufzutauchen), ist es absolut notwendig den Wasserstoff von dem Atemgasgemisch zu enfernen, oder einen anderen Atemgasgemisch zu benutzen. Die Separierung kann erfolgen in der Diffusionszelle 18 a mit Hilfe einer Palladiummembran. Der Wasserstoff diffundiert durch diese Membran bei Temperatur 280 C und kann mit Hilfe eines Hydridspeichers eingelagert werden oder katalytisch zu Wasser umgesetzt werden. Der in dem Atemgas noch enthaltene Sauerstoff reagiert mit dem Wasserstoff an der Palladiumfläche zu Wasser ab und wird mit dem abströmenden Helium abgeführt. Das Helium und das gasförmige Wasser werden durch den Filtereinheit 18 geleitet, dort wird das Atemgas getrocknet und weiter unter Hochdruck in einem der beiden Druckgasbehälter gespeichert. Da in dem Atemgas kein Sauerstoffgehalt mehr gibt, wird auf Konstant-Dosierungsbasis direkt in dem entsprechenden Druckgasbehälter Sauerstoff eingespeist, durch Ventil- und Dosierungsdüse 30a. In dieser Art und Weise wird der Wasserstoff aus dem Atemgas entfernt, nach einigen Speicher- und Entlade-Zyklen. Um sicher zu sein, das kein Wasserstoff-Anteil in dem Atemgas mehr gibt, sind die Wasserstoffdetektoren 19 a und 26 a montiert. Dort sind auch zwei Sauerstoffmessgeräten 19 b und 26 b instaliert.

Der komplizierte Prozes der Wasserstoff-Entfernung kann überfüssig sein, wenn nur in dem Tiefenbereich 100 - 700 m getaucht wird.

In dem Tauchbereich 0 - 600 m statt Wasserstoff können unterschiedliche Gasmischungen eingesetzt werden, bestehend aus Sauerstoff, Stickstoff und Helium. In dem Tiefenbereich 0 - 50 m sind unterschiedliche Gasmischungen auf der Basis Sauerstoff - Stickstoff möglich.

Um eine bessere Stromversorgung zu erzielen, anstelle der Elektrobatterie 19 in einem druckkompensierten Behälter kann eine Alkalische Brenstoffzelle untergebracht werden. Die wird gespeist mit Sauerstoff von Druckgasbehälter 28 und mit Wasserstoff von Druckgasbehälter 6a. Es besteht weiter die Möglichkeit, anstelle der Elektrobatterie 26 einen Wasserstoff-Hydridspeicher zu instalieren. In dieser Art und Weise wird die Stromversorgung des Tauchgerätes wesentlich verbessert und respektiv die Tauchdauer auf mehreren Tauch-Stunden erhöht. Der vorhandene Wasserstoff kann durch katalytisches Verbrenen auch zusätzlich für Warmwassererzeugung benutzt werden und für erwärmen des Atemgases, des Tauchgerätes und des Tauchers eingesetzt werden.

Zusätzlich zu dem Tauchgerät sind auch die Vertikale Elektroantriebsmotoren mit Propeler 20 a und 25 a montiert, die eine bessere vertikale Manövrierfähigkeit des Tauchers gewärleisten.

## Patentansprüche

1. Verfahren zur autonomen Atemgasherstellung, Atemgasaufbereitung und Atemgasversvorgung eines Tauchers in Tauchtiefen von 0 bis 1000 m, **dadurch gekennzeichnet,**
**daß** in einem völlig geschlossenem Kreislauf-Pendel-Speicher-System eine bestimmte Menge fertiges Atemgasgemisch aus Inertgas wie Helium oder unterschiedlichen Gasen wie Stickstoff, Helium, Wasserstoff und Sauerstoff ständig zwischen zwei Hochdruckgasbehältem (15, 29) befördert wird, wobei am Anfang das notwendige Atemgas aus dem einen Hochdruckgasbehälter auf dem Prinzip der Überdosierung und auf Konstantdosierungsbasis in einen Kreislauf gelangt, bestehend aus Einatembeutel (37), Taucherhelm (6), Ausatembeutel (11), und einzelnen oder Doppelpack CO₂-Absorptionsfilter (16, 17), wobei die Atemgasbewegung in diesem Kreislauf von einer Niederdruckmembranpumpe (13) beschleunigt wird, das Atemgas von CO₂ und anderen Verunreinigungen gereinigt, getrocknet und erwärmt wird, zusätzlich mit reinem Sauerstoff gemäß dem zulässigen Sauerstoffpartialdruck für die entsprechende Tiefe auf Konstantdosierungsbasis direkt in diesen Kreislauf oder in einer Mischkammer (27a) angereichert wird und mit Inertgas oder Inertgasen wie Helium und Wasserstoff bei Notwendigkeit oder bei eventuellem Verlust auf Konstantdosierungsbasis angereichert wird und anschließend die überschüssige Menge Atemgasgemisch von einem explosionsgeschützten Hochdruckverdichter (23) angesaugt und unter Hochdruck 220 - 450 bar jeweils in dem anderen der beiden Druckgasbehälter (15, 29) gespeichert wird, wobei, nachdem die ganze Menge Atemgasgemisch in dem einen Druckgasbehälter (15 oder 29) gespeichert wird, ein Magnetventil (31) automatisch oder manuell umschaltet und derselbe Prozeß in die entgegengesetzte Richtung von dem gefüllten zu dem leeren Druckgasbehälter von neuem beginnt, wobei der Prozeß der Benutzung des fertigen Gases, die Aufbereitung des verbrauchten Gases und die Herstellung des neuen Gases und dessen Speicherung unter Hochdruck in einer der beiden Druckgasbehälter in einer Zeitspanne von 20 - 30 mine in größeren Tiefen und bis 100 mine in kleineren Tiefen erfolgt.

2. Verfahren nach Anspruch 1, **dadurch gekennzeichnet, daß** die Niederdruckmembranpumpe (13) selbst von einem Elektromagneten nach elektrischen Impulsen oder von einem Elektromotor 12V/24V betrieben wird.

3. Verfahren nach Anspruch 1 oder 2, **dadurch gekennzeichnet, daß** das überschüssige Atemgas vom Hochdruckverdichter (23) mit einer Ansaug- und Lieferleistung von bis zu 150 L/min unter Hochdruck von 220 - 450 bar in einem zweiten Druckgasbehälter (15 oder 29) gespeichert wird.

4. Verfahren nach einem der vorhergehenden Ansprüche, **dadurch gekennzeichnet, daß** der Hochdruckverdichter (23) von zwei Gleichstrom-Elektromotoren (21, 24) mit einer Leistung von insgesamt 2 bis 3 KW bei 12V/24V und einer Drehzahl von 2000 - 3000 U/min betrieben wird.

5. Verfahren nach einem der vorhergehenden Ansprüche, **dadurch gekennzeichnet, daß** eine speziell konstruierte Vorrichtung für direkte Einspeisung von genau dosierten Mengen Inertgasen oder Saustoff unter Hochdruck in beiden Druckgasbehältem (15, 29) vorhanden ist, für zusätzliche feine Regulierung der Atemgasmischungs-Komponente mit höherer Präzision (30a).

6. Verfahren nach einem der vorhergehenden Ansprüche, **dadurch gekennzeichnet, daß** das notwendige Inertgas für das Tieftauchen - Wasserstoff - in einem Metall-Hydrid-Speicher (26) oder gasförmig in Druckgasbehälter (6a) eingelagert wird.

7. Verfahren nach einem der vorhergehenden Ansprüche, **dadurch gekennzeichnet, daß** die Energiestromversorgung mittels einer alkalischer oder anderen Typen-Brennstoffzellen erfolgt, die mit dem vorhandenen Wasserstoff und Sauerstoff gespeist wird, wobei die Brennstoffzelle in einem druck-kompensiertem Behälter untergebracht ist, selbständig oder in Kombination mit einer oder mehreren konventionellen Typ- oder Li-lonen-Typ Elektrobatterien.

8. Autonomes rückentragbares Schwimmtieftauchgerät mit:zwei Hochdruckgasbehältern (15, 19), wobei
in einem völlig geschlossenem Kreislauf Pendel-Speicher-System eine bestimmte Menge fertiges Atemgasgemisch aus Inertgas wie Helium oder unterschiedüchen Gasen wie Stickstoff, Helium, Wasserstoff und Sauerstoff ständig zwischen den zwei Hochdruckgasbehältem (15, 29) beförderbar ist; einem Kreislauf, bestehend aus Einatembeutel (37), Taucherhelm (6), Ausatembeutel (11), und einzelnen oder Doppelpack CO₂-Absorptionsfilter (16, 17), wobei am Anfang das notwendige Atemgas aus dem ersten Hochdruckgasbehälter (15 oder 29) auf dem Prinzip der Überdosierung und auf Konstantdosierungsbasis in den Kreislauf zuführbar ist; einer Niederdruckmembranpumpe (13), wobei die Atemgasbewegung in diesem Kreislauf von der Niederdruckmembranpumpe (13) beschleunigbar ist; Mitteln, mit denen das Atemgas von CO₂ und anderen Verunreinigungen gereinigt, getrocknet, erwärmt und zusätzlich mit reinem Sauerstoff gemäß dem zulässigen Sauerstoffpartiatdruck für die entsprechende Tiefe auf Konstantdosierungsbasis direkt in den Kreislauf oder in einer Mischkammer (27a) angereichert und mit Inertgas oder Inertgasen wie Helium und Wasserstoff bei Notwendigkeit oder bei eventuellem Verlust auf Konstantdosierungsbasis angereichert wird; einem explosionsgeschützten Hochdruckverdichter (23), wobei anschließend die überschüssige Menge Atemgasgemisch vom explosionsgeschützten Hochdruckverdichter (23) angesaugt und unter Hochdruck 220 - 450 bar jeweils in dem anderen der beiden Druckgasbehälter (15, 29) gespeichert wird; einem Magnetventil (31), wobei, nachdem die ganze Menge Atemgasgemisch in dem einen Druckgasbehälter (15 oder 29) gespeichert wird, das Magnetventil (31) automatisch oder manuell umschaltet und derselbe Prozeß in die entgegengesetzte Richtung von dem gefüllten zu dem leeren Druckgasbehälter von neuem beginnt, wobei
die Niederdruckmembranpumpe (13) selbst von einem Elektromagneten nach elektrischen Impulsen oder von einem Elektromotor 12V/24V betreibbar ist, und das überschüssige Atemgas vom Hodchdruckverdichter (23) mit einer Ansaug- und Lieferleistung von bis zu 150 L/min unter Hochdruck von 220 - 450 bar in dem zweiten Hochdruckgasbehälter (15 oder 29) speicherbar ist, wobei der Hochdruckverdichter (23) von zwei Gleichstrom-Elektromotoren (21, 24) mit einer Leistung von insgesamt 2 bis 3 KW bei 12V/24V mit einer Drehzahl von 2000 - 3000 U/min betrieben wird;
einefspezietl konstruierten Vorrichtung für direkte Einspeisung von genau dosierten Mengen Intergasen oder Sauerstoff unter Hochdruck in beiden Druckgasbehältern (15, 29) für zusätzliche feine Regulierung der Atemgasmischungs-Komponente mit höherer Präzision (30a); einem Hydrid-Speicher (26) wobei das notwendige Intergas für das Tieftauchen - Wasserstoff - im Metall-Hydrid-Speicher (26) oder gasförmig in einem Druckgasbehälter (6a) einlagerbar ist; und einer oder mehreren Elektrobatterien 12V/24V, wobei die zwei Gleichstrom-Elektromotoren (21, 24), die den Hochdruckverdichter (23) betreiben, von der einen oder den mehreren Elektrobatterien 12V/24V (19, 26), mit einer Stromkapazität von 100 - 600 Ah oder mehr, mit Strom versorgt werden, wobei die Batterien (19, 26) vom Blei/Säure-, Nickel/Kadmium- oder Silber/Zink-Typ sein können und in Ölboxen untergebracht sind.

9. Schwimmtieftauchgerät nach Anspruch 8, **dadurch gekennzeichnet, daß** der Hochdruckverdichter (23) und die beiden Elektromotoren (21, 24) in einem Stahlgehäuse untergebracht und ölgekühlt sind, wobei dabei entstehende Wärme mittels eines Wärmetauschers (22) zur Herstellung von Warmwasser benutzt wird und das erwärmte Wasser mit einer Temperatur von ungefähr 45 - 50 °C dem Taucher und für die Erwärmung von Atemgas und Tauchgerät zugeführt wird.

10. Schwimmtieftauchgerät nach Anspruch 8 oder 9, **dadurch gekennzeichnet, daß** an dem Einatembeutel (37) ein Lungenautomat (36) installiert ist, mit der Aufgabe, bei Notwendigkeit zusätzliches Atemgas zu liefern und an dem Ausatembeutel (11) ein Überdruckventil (10) installiert ist, mit der Aufgabe, bei Notwendigkeit das überschüssige Atemgas in das umgebende Wasser abzugeben.

11. Schwimmtieftauchgerät nach einem der vorhergehenden Ansprüche 8 bis 10, **dadurch gekennzeichnet, daß** an dem Ausatembeutel (11) ein Sicherheitsventil (9) angebracht ist, wobei dieses Ventil (9) bei nicht ausreichender Menge Atemgas verhindert, daß der Verdichter (23) Gas aus der lunge des Tauchers ansaugt, wobei dieselbe Gefahr auch das Rückschlagventil (35) verhindert, installiert an dem Einatembeutel (37) und das Sicherheitsventil (9) mit Ausschaltautomatik versehen ist und auch die Elektromotoren (21, 24) des Verdichters (23) ausschaltet.

12. Schwimmtieftauchgerät nach einem dervorhergehenden Ansprüche 8 bis 11, **dadurch gekennzeichnet, daß** zwei Elektroantriebsmotoren (20, 25), mit einer Gesamtleistung von 0.3 - 0,5 KW oder mehr bei einer Spannung von 12V/24V installiert sind und die beiden Elektromotoren (20, 25) mit Strom von den vorhandenen Batterien (19, 26) versorgt werden und ermöglichen, daß der Taucher sich mit einer Geschwindigkeit von 4 - 6 Knoten oder mehr hörizontat oder vertikal bewegt, mit einer Reichweite von 30 bis 200 km je nach der vorhandenen Stromkapazität.

13. Schwimmtieftauchgerät nach einem der vorhergehenden Ansprüche 8 bis 12, **dadurch gekennzeichnet, daß** alle wichtigen Funktionen des Gerätes von einem Kontrollpanel (1) von dem Taucher selbst kontrolliert und gesteuert sind, wie Atemgasgemisch-Konstantdosierung. Sauerstoffzufuhr-Konstantdosierung. tnertgaszufuhrdosierung, Atemgasvorrat, Sauerstoffvorrat, Inertgasvorrat, Ansaug- und Liefermengeleistung des Hochdruckverdichters (23). Ansaugfrequenz der Niedruckmembranpumpe, Umdrehungen und Amperaufnahme der Verdichterantriebs-Elektromotoren (21, 24), Umdrehungen und Amperaufnahme der Bewegungsetektromotoren (20, 25), Temperatur der Heizungswasser, Benutzung und Vorrat von Stromkapazität, Ein- und Ausschalten von Femlichter, Video- und Sprachaniage usw.

14. Schwimmtieftauchgerät nach einem der vorhergehenden Ansprüche 8 bis 13, **dadurch gekennzeichnet, daß** ein speziell für das Gerät entwickelter Tauchcomputer ständig ein Bild von allen notwendigen Parametern dem Taucher vermittelt, wie Gaszufuhr, Gasdosierung, Gasvorrat, Gas- und Umgebungsdruck, Gas- und Wassertemperatur, Tauchzeit, Dekostops, Ansaug- und Lieferleistung des Hochdruckverdichters (23), vorhandene Stromkapazität, O₂ und CO₂-Anteil, Elektromotorendrehzahl, Wasserheizungstemperatur und Liefermenge, Entfernung, Strömungs- und Bewegungsgeschwindigkeit, Navigationsparametern usw.

15. Schwimmtieftauchgerät nach einem der vorhergehenden Ansprüche 8 bis 14, **dadurch gekennzeichnet, daß** als Zusatzausrüstung eine Kabeltrommel mit Winsch an dem Gerät montiert werden kann, wobei der Taucher zu jeder Zeit aus jeder Tiefe auf eigene Initiative Strom-, Video- und Sprechverbindung mit der Oberfläche oder Kommandozentrale aufnehmen kann, mittels eines aufblasbaren Auftriebkörpers, bestückt mit Blitzlicht und Antenne für eine leichte Entdeckung.

16. Schwimmtieftauchgerät nach einem der vorhergehenden Ansprüche 8 bis 15, **dadurch gekennzeichnet, daß** als Zusatzausrüstung und um weniger Strömungswiderstand und höhere Geschwindigkeit zu erzielen, spezielle Strömungslinienschalen in verschiedenen Ausführungen vorgesehen sind, die auf dem Basisgerät montiert werden können, wobei die Schalen leicht und durchsichtig aus Acrylglas hergestellt, in zwei Teilen als Hinter- und Vorderteil am Tauchgerät befestigt und abnehmbar ausgebildet sind.

17. Schwimmtieftauchgerät nach einem der vorhergehenden Ansprüche 8 bis 16, **dadurch gekennzeichnet, daß** die Energiestromversorgung mittels einer alkalischen oder anderen Typen-Brennstoffzellen erfolgt, die mit dem vorhandenen Wasserstoff und Sauerstoff gespeist wird, wobei die Brennstoffzelle in einem druckkompensierten Behälter untergebracht ist, selbständig oder in Kombination mit einer oder mehreren konventionellen Typ- oder Li-lonen-Typ Elektrobatterien.

## Claims

1. A method for the autonomous production, enrichment and supply of breathing gas to a diver at diving depths of 0-1000 m, which is **characterized by** the fact that in a completely closed circuit - pendulum-storage system a certain amount of ready breathing gas mixture, which comprises an inert gas like helium and oxigen or different inert gases like nitrogen, helium, hydrogen and oxygen, is continuously conveyed between two pressurized gas containers (15, 19), whereas at the beginning the breathing gas needed enters from the one pressurized gas container on the overdosing and constant dosage principle in a closed circuit , consisting of an inhalation bag (37), a diving helmet (6), an exhalation bag (11), single or double pack of CO₂-absorption filters (16, 17), where the advance of the breathing gas along this closed circuit is speeded up by means of a low-pressure membrane pump (13), the breathing gas is filtered of CO₂ and other contaminants, dried and warmed-up, the exhaled breathing gas mixture is enriched additionally with pure oxigen, based on constant dosage according to the admissible partial oxygen pressure for the respective depth, directly in this circuit or in the mixing chamber (27-a), enriched on constant dosage principle also with inert gas or different inert gases like helium or hydrogen if necessary or on eventual loss and finally the excessive quantity of breathing gas is drowned-in by one explosion-protected high-pressure compressor (23) and compressed at high pressure of 220-450 bar in one of the two pressurized containers (15, 29), then, after the whole quantity of breathing gas mixture is compressed in one of the two pressurized containers (15 or 29), a magnet valve (31) is switched over automatically or manually and the same process starts in the reverse direction - from the full container to the empty one under pressure, and thus the process of utilization of the ready-to breathing gas, of enrichment of the gas used and of the production and accumulation of the new breathing gas under pressure in one of the two high-pressure gas containers is conducted within 20 - 30 minutes for bigger depths or within 100 minutes for smaller depths.

2. A method according to claim 1, **characterized by** the fact that the low-pressure membrane pump (13) is being driven by electromagnets with electric impulses or 12V/24V electric motor.

3. A method according to claims 1 and 2, **characterized by** the fact that the excessive breathing gas is compressed in a second pressurized container (15 or 29) from a high-pressure compressor /23/ with pumping-in power and supply of up to 150 l/min under high pressure of 220-450 bar.

4. A method according to claim 1, **characterized by** the fact that the high-pressure compressor (23) is powered by two direct-current electric motors (21, 24), operating at 12V/24V, 2 to 3 kW, and 2000-3000 U/min.

5. A method according to the previous claims, **characterized by** the availability of a specially designed unit for the direct input of precisely dosed quantities of inert gases or oxygen under high pressure in the two pressurized gas containers (15, 29), with a view to additional fine adjustment of the breathing gas components to attain greater precision (30-a).

6. A method according to the previous claims, **characterized by** the fact that the necessary inert gas - hydrogen - is stored in a metal-hydride container (26) or in gaseous form under pressure in a pressurized container (6-a).

7. A method according to the previous claims, **characterized by** the fact that the electrical power-supply is effected through an alkaline or some other type of fuel cell which is supplied by the available hydrogen and oxygen, whereas the fuel cell is placed in a pressure-compensating vessel, alone or in combination with one or more conventional-type or lithium-ion type accumulators.

8. Autonomous deep-water diving apparatus carried on the back, with: two pressurized gas containers (15, 29), where in one closed circuit - pendulum - storage system - a definite quantity of ready-made gas mixture comprising inert gas like helium and oxigen or different inert gases like nitrogen, helium, hydrogen and oxygen is able to be conveyed between two pressurized gas containers (15, 29), one breathing area in a closed circuit, consisting of inhalation bag (37), a diving helmet (6), exhalation bag (11) and single or double pack of CO₂-absorption filters (16, 17); in which at the beginning the breathing gas necessary is lead in the circuit from the first pressurized gas container (15 or 29) on an overdosing and constant-dosage basis; one low-pressure membrane pump (13), which accelerates the circulation of the breathing gas and in this way the breathing gas is being cleared of CO2 and other contaminants, dried and wormed; means for delivering a supply of pure oxigen to the system for enriching the filtered breathing gas exhaled by the diver, wherein the supply of oxigen added is based on a constant dosage according to the admissible partial oxigen pressure for the respective depth, directly into the circuit or in a mixing chamber (27-a) and inert gas or inert gases like helium and hydrogen if necessary or at a possible loss on a constant-dosage basis; one explosion-protected high-pressure compressor (23), by the means of which the extra quantity of breathing gas mixture is sucked in and compressed under 220 - 450 bar of pressure in the second less full pressurized gas container (15, 29); one mognetic valve (31) which is being switched over automatically or manually after the whole amount of the breathing gas has been compressed from the first into the second pressurized container (15, 29)and in this way the whole process is being reversed and started again from the beginning - from the full to the empty pressurized gas container, where the low-pressure membrane pump (13) is being set in motion by an electromagnet driven by electric impulses or by 12V/ 24V electric motor and the extra quantity of breathing gas is compressed by the high-pressure compressor (23), outputting up to 150 l/min, under pressure of 220 - 450 bar in the second pressurized gas container (15, 29), where the high-pressure compressor (23) is being powered by two direct-current electric motors (21, 24) operating at 12V24V , 2 to 3 kW, and 2000-3000 U/min; a specialty constructed device for direct infusion of strictly dosed inert gasses or oxygen under high pressure in the two pressurized gas containers (15, 29) for additional precise control of the breathing gas components (30-a); one metal-hydride depositary (26) where the inert gas necessary for deep diving - hydrogen - is being kept or under pressure in a pressurized container; one or more 12V/ 24V batteries whose energy and 100 - 600 Ah capacity is able to set in motion the two direct-current electric motors (21, 24), which on their part drive the high-pressure compressor (23), wherein the batteries may be lead-acid, nickel-cadmium or silver-zinc type and are placed in oil filled boxes for pressure compensation.

9. A deep-water diving apparatus according to the claim 8, **characterized by** the fact that the high-pressure compressor (23), and the two electric motors (21; 24) are placed in steel container and are oil-cooled, the heat thus generated through heat exchanger (22) is used for the production of hot water which is supplied to the diver at temperature of 45-50°C to warm him, the breathing gas and the rebreather.

10. A deep-water diving apparatus according to the claim 8, **characterized by** the fact that on the inhalation bag (37) a demand regulator (36) is installed whose task is to provide additional quantity of breathing gas in case of need and on exhalation bag (11) an outlet valve (10) is installed, whose task is to release the excessive breathing gas into the surrounding media in case of need.

11. A deep-water diving apparatus according to the previous claims 8-10, **characterized by** the fact that exhalation bag (11) is supplied with safety valve (9), which prevents that the high-pressure compressor (23) is pumping gas out of the diver's lungs on insufficient amount of breathing gas in the closed circuit, the same risk is also prevented by non-return valve (35), installed on exhalation bag (37); the safety valve (9) is supplied with switching-off automat; it switches-off the electric motors (21; 24) of the high-pressure compressor in emergency case.

12. A deep-water diving apparatus according to the previous claims 8-11, **characterized by** the fact that, as a propulsion unit, two electric motors 12V/24V (20, 25) are installed, with overall power of 0.3-0.5 kW or more, which are powered by electricity from the available accumulators (19, 26), enabling the diver to advance in horizontal and vertical direction with velocity of 4-6 knots or more, at a distance of 30 to 200 km, depending on the available current capacity.

13. A deep-water diving apparatus according to the previous claims 8-12, **characterized by** the fact that, through control panel (1) the diver himself controls all major functions of the device, namely: constant dosage of the breathing gas mixture, constant dosage of the oxygen inflow, dosage of the inert gas inflow, breathing gas stock (oxygen and inert gas), pumping power and supply of the high-pressure compressor (23), pumping frequency of the low-pressure membrane pump (13), rotation and ampere-receipt of the electric motors (21, 24) driving the compressor , rotation and ampere-receipt of the propulsion motors (20, 25), temperature of the heated water, use and stock of the available current capacity, switching on and off of the lights, video and audio devices, etc.

14. A deep-water diving apparatus according to the previous claims 8-13, **characterized by** the fact that a specially-designed-for it diving computer provides the diver continuously with a picture of all needed parameters, such as: gas inflow, gas stock, gas and environmental pressure, gas and water temperature, diving time, deko-stops, pumping-and supply power of the high-pressure compressor (23), available current capacity, O₂ and CO₂ content, rotation number of the electric motors, temperature of the heated water and the supplied amount of it, distance, velocity of the water currents, advance velocity, navigation parameters etc.

15. A deep-water diving apparatus according to the previous claims 8-14, **characterized by** the available option for a cable drum with winch to be mounted on the device, enabling the diver to establish at any time and depth on his own initiative, electric, video or audio connection with the surface or the control office, through an inflatable floatation body, equipped with bliz-light, and quick-detection antenna.

16. A deep-water diving apparatus according to the previous claims 8-15, **characterized by** the available additional equipment, consisting of different patterns of special stream-fine covers (Fig.3), adapted to reducing current resistance and achieving greater velocity which are light and transparent , made of acryl glass and consist of two parts-a back part, attached to the diver's back, and a front part that can be taken off.

17. A deep-water diving apparatus according to the previous claims 8-16, **characterized by** the feature that the electric power supply is carried out by means of an alkaline or other type of fuel cell, which is supplied by the available hydrogen and oxygen, placed in a pressure-compensating container on its own or together with one or more conventional or lithium-ion type batteries.

## Revendications

1. Une méthode de production autonome, d'enrichissement et d'approvisionnement en gaz respiratoire de scaphandrier à des profondeurs de plongée depuis 0 jusqu'à 1000 m qui se **caractérise par le fait que** dans un circuit tout à fait fermé -un système de compression et conservation- une quantité déterminée de mélange gazeux tout prêt de gaz inerte comme l'hélium, ou de gaz différents comme l'azote, l'hélium, l'hydrogène et l'oxygène se transfèrent à titre constant entre deux bouteilles (récipients) à haute pression/15;29/ alors qu'au début le gaz respiratoire nécessaire de l'un des récipients à haute pression accède sur le principe du surdosage et à la base du dosage ininterrompu au circuit, consistant en tube inspiratoire/37/, casque de scaphandrier/6/, tube expiratoire/11/, enveloppe unique ou double de filtres d'absorption de gaz carbonique/16;17/, alors que le mouvement du gaz respiratoire dans ce circuit s'effectue par une pompe à membrane à basse pression/13/, le gaz respiratoire est épuré du CO₂ et des autres polluants, est desséché et réchauffé, est enrichi supplémentairement à la base du dosage en oxygène pur à titre continu, suivant la pression partielle d'oxygène admissible pour la profondeur respective, directement dans ce circuit ou dans la chambre de mélange /27-a/, est mélangé au gaz inerte ou à différents gaz inertes, comme l'hélium et l'hydrogène, en cas de nécessité, ou en cas de perte éventuelle à la base du dosage continu, et enfin la quantité surabondante de gaz respiratoire est absorbée par un compresseur à haute pression /23/, assuré contre l'explosion, après quoi celle-ci est comprimée sous haute pression 220-450 bars, respectivement à l'intérieur d'une des deux bouteilles à haute pression/15;29/, après que la quantité entière de mélange de gaz respiratoire est comprimée dans une des bouteilles à haute pression/15 ou 29/, une valve-magnéto /31/ est tournée automatique ou manuell, et le même processus commence dès le début en sens inverse - de la bouteille pleine vers la bouteille vide sous pression, alors que le processus d'utilisation du gaz respiratoire prêt pour l'enrichissement du gaz utilisé et pour la production du nouveau gaz respiratoire et son accumulation sous haute pression dans une des deux bouteilles à haute pression, est effectué dans une intervalle de temps de 20 - 30 minutes aux grandes profondeurs, et jusqu'à 100 minutes aux petites profondeurs.

2. Une méthode d'après la prétention 1, se caractérisant du fait que la pompe à membrane à basse pression/13/ est actionnée par des magnétos électriques aux impulsions électriques ou un moteur électrique 12V/24V.

3. Une méthode d'après les prétentions 1 et 2, se caractérisant du fait que le gaz respiratoire surabondant est compressé par un compresseur à haute pression/23/ d'une puissance d'absorption et d'approvisionnement de 150 1/min sous haute pression 220-450 bars dans une des deux bouteilles à gaz comprimé/15;29/.

4. Une méthode d'après la prétention 1, se caractérisant du fait que le compresseur à haute pression/23/ est actionné par deux moteurs électriques à courant électrique continu/21;24/ d'une puissance totale de 2 à 3 kW, 12V/24V, 2000-3000 U/min.

5. Une méthode d'après les prétentions précédentes, se caractérisant du fait qu'à l'aide d'un dispositif spécialement conçu, des quantités de gaz inertes ou d'oxygène sous haute pression sont débitées directement dans les deux bouteilles de gaz sous pression/15;29/ pour le réglage soigneux des composantes du gaz respiratoire afin d'obtenir une précision plus élevée/30-a/.

6. Une méthode d'après les prétentions précédentes, se caractérisant du fait que le gaz inerte nécessaire - l'hydrogène- est emmagasiné dans un conteneur en métal-hydride/26/ ou sous la forme de gaz dans un récipient sous pression/6-a/.

7. Une méthode d'après les prétentions précédentes, se caractérisant du fait que l'alimentation d'énergie électrique s'effectue à travers une cellule à combustion alcaline ou autre (fuel cell), laquelle est alimentée de l'hydrogène et l'oxygène disponibles, alors que la cellule à combustion est placée dans un récipient compensant la pression, seule ou en combinaison avec des accumulateurs de type conventionnel ou de type lithium-ioniques.

8. Appareil autonome de plongée à grande profondeur, porté au dos, consistant en deux bouteilles (récipients) à haute pression/15;29/, qui permet de débiter dans un système fermé de compression et de conservation une certaine quantité de mélange gazeux tout prêt, composé de gaz inerte comme l'hélium, ou de plusieurs gaz inertes comme l'azote l'hélium et l'hydrogène, et d'oxygène, qui est transférée sans interruption entre deux bouteilles à haute pression/15;29/, dans un circuit consistant en tube inspiratoire/37/, casque de scaphandrier/6/, tube expiratoire/11/, emballage simple ou double de filtres d'absorption de gaz carbonique/16;17/, alors qu'au début le gaz respiratoire nécessaire est débité, sur le principe du surdosage et du dosage constant, de la première bouteille à haute pression/15;29/ dans le circuit; une pompe à membrane à basse pression/13/ qui accélère le mouvement du gaz respiratoire dans ce circuit; a l'aide desdits dispositifs le gaz respiratoire est épuré du gaz carbonique et des autres polluants, est desséché et réchauffé, le gaz respiratoire est enrichi supplémentairement d'oxygène pur d'après la pression partielle d'oxygène admissible pour la profondeur respective à la base du dosage à titre constant, directement dans le circuit ou dans la chambre de mélange /27-a/, ainsi que de gaz inerte ou mélange de gaz inertes comme l'hélium et l'hydrogène en cas de nécessité, ou en cas de perte éventuelle à la base du dosage continu; un compresseur à haute pression/23/, assuré contre l'explosion, qui permet de comprimer et de conserver sous haute pression - 220-450 bar la quantité excessive (superflue) de gaz respiratoire à l'intérieur de la deuxième bouteille à haute pression/15 ou 29/; une valve-magnéto/31/, laquelle, après que la quantité entière de mélange de gaz respiratoire est comprimée dans une des bouteilles à haute pression/15 ou 29/, est tournée automatiquement ou à la main, et le même processus commence dès le début en sens inverse-du côté de la bouteille pleine vers la bouteille vide sous pression, alors que la pompe à membrane à basse pression /13/ est actionnée par un magnéto électrique aux impulsions électriques ou par un moteur électrique 12V/24V, et la quantité excessive (superflue) de gaz est comprimée par le compresseur à haute pression /23/ d'une puissance d'absorption et d'approvisionnement de 150 1/min sous haute pression de 220-450 bars dans la deuxième bouteille (récipient) à haute pression /15 ou 29/, alors que le compresseur de haute pression /23/ est actionné par deux moteurs à courant électrique continu/21;24/ d'une puissance totale de 2 à 3 kW, 12V/24V, 2000-3000 U/min; un dispositif spécialement conçu, destiné à débiter des quantités de gaz inertes ou d'oxygène sous haute pression directement dans les deux bouteilles de gaz sous pression/15;29/ pour le réglage soigneux des composantes du gaz respiratoire afin d'obtenir une précision plus élevée/30-a/; un conteneur en métal-hydride/26/, où le gaz inerte nécessaire pour la plongée à grande profondeur - l'hydrogène - est conservé, ou en état gazeux dans un récipient sous pression /6-a/; un ou plusieurs accumulateurs 12V/24V, grâce à l'énergie électrique et la capacité de 100-600 Ah desquels sont actionnés les deux moteurs électriques de courant continu /21,24/, lesquels actionnent le compresseur de haute pression /23/, alors que les accumulateurs peuvent être du type plomb-acide, nickel-cadmium ou argent-zinc, et sont placés dans des étuis à l'huile pour compenser la pression.

9. Appareil de plongée à grande profondeur, d'après la prétention 8, se caractérisant du fait que le compresseur à haute pression/23/ et les deux moteurs électriques/21;24/ sont placés dans une enveloppe d'acier et sont refroidis à l'huile, la chaleur qui en est produite est utilisée au moyen d'un échangeur de chaleur/22/ pour la production d'eau chaude, l'eau réchauffée est débitée au scaphandrier à une température de 45-50°C pour réchauffer le gaz respiratoire et l'appareil de plongée.

10. Appareil de plongée à grande profondeur, d'après la prétention 8, se caractérisant du fait qu'au-dessus du tube inspiratoire/37/est installé un automate respiratoire/36/, qui a la tâche en cas de nécessité de débiter du gaz respiratoire supplémentaire, au-dessus du tube expiratoire/11/ est installée une valve de sécurité contre la surpression/10/ à la tâche en cas de nécessité de rejeter le gaz respiratoire surabondant dans l'environnement- l'eau.

11. Appareil de plongée à grande profondeur, d'après les prétentions précédentes de 8 à 10, se caractérisant du fait qu'on a placé une valve de sécurité/9/ au-dessus du tube expiratoire/11/, cette valve /9/ empêche le compresseur/23/ à haute pression d'absorber du gaz des poumons du scaphandrier, faute d'une quantité suffisante de gaz respiratoire, le même risque est évité également à l'aide d'une valve inverse/35/, installée sur le tube inspiratoire/37/, la valve de sécurité/9/ est pourvue de dispositifs de débranchement automatique et déconnecte également les moteurs électriques/21;24/ du compresseur à haute pression/23/.

12. Appareil de plongée à grande profondeur, d'après les prétentions précédentes de 8 à 11, se caractérisant du fait qu'en tant de dispositif d'actionnement sont installés deux moteurs électriques d'une puissance totale 0,3-0,5 kW ou plus, 12V/24V, les deux moteurs électriques/20;25/ sont alimentés de courant par les accumulateurs /19;26/ disponibles et donnent au scaphandrier la possibilité de se mouvoir en sens vertical et horizontal d'une vitesse de 4 à 6 noeuds ou plus, à une distance de 30 à 200 km, suivant la capacité de courant disponible.

13. Appareil de plongée à grande profondeur, d'après les prétentions précédentes de 8 à 12, se caractérisant du fait que toutes les fonctions importantes de l'appareil sont contrôlées et dirigées par un panneau de commande/1/, porté par le scaphandrier lui-même, et notamment: le dosage constant du mélange gazeux, le dosage constant de l'afflux d'oxygène, le dosage de l'afflux de gaz inerte, les réserves en gaz respiratoire et en oxygène, gaz inerte, la puissance d'absorption et de compression par le compresseur à haute pression/23/, la fréquence d'actionnement de la pompe à membrane à basse pression/13/, la rotation et l'ampérage des moteurs électriques/21;24/ actionnant le compresseur, la rotation et l'ampérage des moteurs mouvants/20;25/, la température de l'eau réchauffée, l'utilisation et la réserve de capacité électrique, le branchement et le débranchement des feux, les outils de télécommunication vidéo et audio.

14. Appareil de plongée à grande profondeur, d'après les prétentions précédentes de 8 à 13, se caractérisant du fait que l'on a construit exclusivement pour l'appareil un ordinateur de plongée qui fournit au scaphandrier une image continue de tous les paramètres indispensables tels qu'afflux de gaz, réserve de gaz, pression du gaz et de l'environnement, température du gaz et de l'eau, temps de plongée, décostops, puissance d'absorption et d'approvisionnement de gaz par le compresseur à haute pression/23/ capacité disponible du courant, contenu d'oxygène et de gaz carbonique, tours des moteurs électriques, température de l'eau réchauffée et de sa quantité qui est débitée, éloignement, vitesse des courants sous-marins, vitesse, paramètres de navigation etc.

15. Appareil de plongée à grande profondeur, d'après les prétentions précédentes de 8 à 14, se caractérisant du fait qu'en tant qu'équipement additionnel il est possible de monter au-dessus de l'appareil un tambour à treuil à câble, tandis que le scaphandrier peut sur sa propre initiative, à tout moment et à n'importe quelle profondeur, établir un contact électrique, vidéo ou verbal avec la surface ou avec la centrale de commande par l'intermédiaire d'un corps gonflable surnageable pourvu de feux clignotants et antenne à prompt dépistage.

16. Appareil de plongée à grande profondeur, d'après les prétentions précédentes de 8 à 15, se caractérisant du fait qu'en tant qu'équipement additionnel, pour obtenir une résistance plus petite de l'eau et une vitesse plus grande, sont prévues des couvertures hydrodynamiques spéciales - des formes d'exécution différente, lesquelles peuvent être montées sur l'appareil principal/fig.3/, les enveloppes sont légères et transparentes, fabriquées de verre acrylique en deux parties -partie postérieure fixée sur l'appareil de plongée et partie antérieure mobile.

17. Appareil de plongée à grande profondeur, d'après les prétentions précédentes de 8 à 16, se caractérisant du fait que l'alimentation en énergie électrique est effectuée à travers une cellule à combustion alcaline ou autre (fuel cell), laquelle est alimentée de l'hydrogène et l'oxygène disponibles, alors que la cellule à combustion est placée dans un récipient compensant la pression, seule ou en combinaison avec un ou plusieurs accumulateurs de type conventionnel ou de type lithium-ioniques.
